# EUROPEAN PATENT APPLICATION

(11) **EP 1 705 839 A1**
(43) Date of publication of application: **27.09.2006**
(21) Application number: 05006396.5
(22) Date of filing: 23.03.2005
(51) Int. Cl.: H04L 12/46, H04L 12/56

(54) **Guaranteed bandwidth end-to-end services in bridged networks**

(71) Applicant: SIEMENS AKTIENGESELLSCHAFT, 80333 München (DE)
(72) Inventor: Berechya, David, 40600, Tel-Mond (IL); Peles, Yehoshua, Raanana (IL)

(57) **Abstract**

The invention relates to a method and a network management system for providing bandwidth resources for a guaranteed bandwidth service in an Ethernet network. After receiving a request for a guaranteed bandwidth service links (L₁,...,L₅) are to be used for the requested service. The determininh availability of sufficient resources is checked by calculating the total resources to be reserved on said links (L₁,...,L₅) and checking whether sufficient resources are available on said links (L₁,...,L₅) The service is admitted and the corresponding resources are reserved if sufficient resources are available. To guarantee the service quality traffic policing is provided in accordance with the allocated resources. The present invention proposes a systematic approach for guaranteed bandwidth services in an Ethernet network.

## Description

The invention relates to a method for providing bandwidth resources for a guaranteed bandwidth service in an Ethernet network and a management system adapted for carrying out steps of this method.

Local area networks (LANs) are routinely deployed for providing network connectivity among stations confined to a limited area. A LAN typically enables connected stations to transmit data packets called frames. Usually, such a frame will comprise an address identifying the receiving station or destination. The data transmission is mostly based on the Ethernet or IEEE 802.3 protocol. To extend the range of such networks layer 2 switches (bridges) are commonly used. In addition to layer 1 functions (signal amplification, forwarding) a bridge extracts address information so as to filter traffic.

More complex network topologies may arise when bridges are interconnected to interlace multiple LANs. In this case, network engineers often employ the so called virtual bridged local area networks concept. This concept relies on virtual LANs (VLANs), i.e. LANs that are only logically defined and do no more consist of dedicated physical network. It is rather dedicated resources that should be provided for a virtual LAN.

The Institute of Electrical and Electronics Engineers (IEEE) came up with a standard (IEEE 802.1Q) defining the operation of layer 2 VLAN bridges that permit the definition, operation and administration of virtual LAN topologies within a bridged LAN infrastructure. Within the IEEE 802.1Q concept spanning tree algorithms are employed to provide for loop-free transmission of data. A spanning tree may be calculated per VLAN to identify a subset of links to be used for transmission of data. Spanning tree protocols that are currently in use are IEEE 802.1d (spanning tree protocol STP), IEEE 802.1w (rapid spanning tree protocol RSTP), and IEEE 802.1s (multiple spanning tree protocol MSTP). The main enhancement introduced by multiple spanning trees (MSTs) is that several VLANs can be mapped to a single spanning tree called multiple spanning tree instance (MSTI).

As VLANs should be enabled to service different types of traffic there is a need to enhance bridges with means to differentiate between different service classes of traffic. A suitable way to define traffic classes or service classes is to provide for identifiers or labels in frame headers that govern the treatment by individual bridges.

While service classes give rise to priority-based processing of data frames, there is no guarantee that service quality remains within set or fixed bounds, because an overload of high-priority traffic or link failures can lead to service degradation. Hence, to provide for guaranteed quality of service one has to go beyond mere classification of frames. Therefore, it has been proposed to add traffic policing at service edge points. Thresholds can be used to put a limit to the amount of traffic entering a network. The quality of service crucially depends on the availability of bandwidth to transport high priority traffic. Hence, the efficiency of traffic policing relies on whether suitable mechanisms can be found to control the load of the network links via suitably chosen traffic policing parameters.

The objective of the present invention is to provide for flexible and reliable bandwidth guaranteed services across Ethernet bridged networks.

A method is proposed that allows for reserving bandwidth resources or bandwidth capacity for services such as VLAN connections and for keeping the resource exploitation within set bounds by means of traffic policing. In order to reserve bandwidth for a service network links will be determined for the transmission of data within this service. The determination of links can be effected by using a spanning tree algorithm (e.g. STP, RSTP, or MSTP). Spanning tree algorithms usually provide unique connections between termination points so that it is straightforward to identify the links corresponding to a service. Alternative ways to determine links to be used exist, e.g. methods for calculating routes between termination points. The links can be determined by a network management system, e.g. located at a management server, which has access to individual network elements and may configure switches accordingly. After identifying links for the service it is checked whether sufficient resources are available on these links. In other words, a kind of admission control is performed not to overbook the available bandwidth resources. The service is admitted and the requested bandwidth is allocated only if sufficient resources are available.

The present method allows for QoS (quality of service) guarantees for data transmission over Ethernet. Bandwidth, usually the crucial parameter when applying the Ethernet technology in a LAN (local area network) or metro network environment is guaranteed. In particular, when private networks are enhanced by VLAN connections the present method leads to well controlled and transparent services.

The invention may be enhanced to provide resilience against network failures. It is desirable to maintain a guaranteed bandwidth service even when a network failure occurs. Network failures may be taken into account in the process of bandwidth reservation. In this case, it is checked for the network topology resulting from the failure whether sufficient bandwidth resources still are available, e.g. on different links to which the traffic may be switched. Bandwidth resources will only be reserved if the service the service requires can be guaranteed for. In detail, the method goes as follows
- an error scenario for a service is identified,
- links to be used in this error scenario are determined,
- it is checked whether sufficient resources are available on the links for the network topology resulting from the error, and
- bandwidth is only allocated if the network error does not interfere with the guaranteed bandwidth service.

It is sensible to treat a number of error scenarios in the above way and to admit a new service only if sufficient bandwidth is available for all error scenarios. The error scenarios can be chosen in a systematic way, e.g. including all single link failures.

The present method can be performed by help of an especially/suitably adapted management system for Ethernet networks, which is also part of the present invention. Such a management system does comprise means for carrying out steps of the present method. These means may be software means (e.g. software routines or modules cooperating with software on the management system and Ethernet switches) or hardware means (ASICs, DSPs, ..). Thus, the management system is enhanced to perform following steps
- determining links for a service,
- calculating total bandwidth requirements on said links,
- checking the availability of the required bandwidth, and
- deciding the admissibility of a service in accordance with the availability of the required bandwidth resources.

In case a service is admitted the switches of the network should be configured accordingly (e.g. data transmitted in conjunction with this service should be subjected to policing with thresholds according to the reserved bandwidth). This can be done manually. It is preferably, however, to provide the management system with means for
- configuring Ethernet switches in accordance with bandwidth requirements of an admitted service.

The network management can also be adapted to take error scenarios into account. Then it further comprises means for
- identifying error scenarios,
- checking the availability of the required bandwidth in error scenarios, and
- deciding the admissibility of a service in accordance with the availability of the required bandwidth resources in these error scenarios.

The present management system may be implemented on a server. A distributed system solution is another possible variant.

Below, an embodiment of the invention is provided that illustrates the inventive concept with reference to figures. The figures show
Fig. 1: A bridged network
Fig. 2: A first spanning tree instance, which is mapped to a first service provided by the network carrier
Fig. 3: A second spanning tree instance, which is mapped to a second service provided by the network carrier
Fig. 4: A table specifying the accumulated bandwidth requirements for the first and second service
Fig. 5: A third spanning tree instance calculated under the assumption of a link failure, which is mapped to the first service
Fig. 6: A table providing a bandwidth allocation matrix specifying the accumulated bandwidth requirements for each link and different network topologies
Fig. 7: A route determined for a third service to be supported by the network
Fig. 8: A table providing a bandwidth allocation matrix for the third service specifying the bandwidth requirements for each link and different network topologies
Fig. 9: The table of fig. 6 after adding the third service

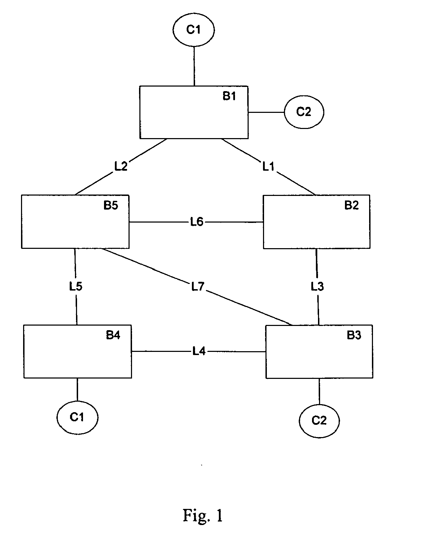

Fig. 1 shows a bridged network where bridges B1,...,B5 are connected via links L1 ,...,L7. Customer sites of a first and second customer are indicated by C1 and C2, respectively. These customer sites may be constituted by customer premises equipment (CPE) and/or private networks (e.g. privately owned LANs). The network is to supply or provide guaranteed bandwidth end-to-end connections for both customers. Hence, dedicated bandwidth resources are allocated for both customers translating into two guaranteed bandwidth services (first and second service) for data transmission between the C1 sites and the C2 sites. The two services consist of setting up two VLANs or guaranteed bandwidth tunnels between customer sites. Traffic policing is provided at UNI (user network interface) ports to ensure that the used bandwidth does not exceed the limits set according to the specified service requirements (usually, service parameters are fixed or negotiated prior to service provisioning via so-called service level agreements (SLAs)). For instance, the UNI ports of bridges B1 and B2 that provide the interfaces for the customer sites C1 are subjected to traffic policing so that the amount of traffic stays within guaranteed bounds. In the present example where only two termination points per service are involved (point-to-point service) a policing may be performed by checking whether transmitted data belong to a specified service (i.e. whether they are priority class data subjected to a guaranteed bandwidth service). For more complex services (e.g. multipoint-to-multipoint) network topology can be taken into account for policing to prevent link overload. Thus, policing may be performed in a destination-sensitive way (i.e. thresholds are defined per VLAN, priority class, and destination address) so as to limit bandwidth exploitation on individual network links. In this case, network management will use information on the respective route to the destination to calculate the link load and to adapt policing accordingly.

Below, it is assumed that the bridges B1,...,B5 are operated according to the IEEE 802.1Q standard. The network supplies two guaranteed bandwidth services:
- Service S1 is connecting two sites of customer C1 (one site connected to bridge B1 and the other connected to bridge B4). Bi-directional transmission of data is assumed. The guaranteed bandwidth for the accumulated traffic in both directions is 150 MB/s.
- Service S2 is connecting two sites of customer C2 (one site connected to bridge B1 and the other connected to Bridge B3). Bi-directional transmission of data is assumed. The guaranteed bandwidth for the accumulated traffic in both directions is 100 MB/s.

Each of the network links L1 ,...,L7 is assigned a total reserved bandwidth for guaranteed traffic (RGBW). In the present example the total bandwidth available is assumed to be 300 MB/s.

Evidently, the total bandwidth of 300 MB/s is sufficient to provide services S1 and S2 under regular operation conditions, as the accumulated bandwidth reserved for these services cannot exceed 150 + 100 = 250 MB/s on a given link. Below, it is first shown how error scenarios are taken into account and second how to proceed when a new service is to be added.

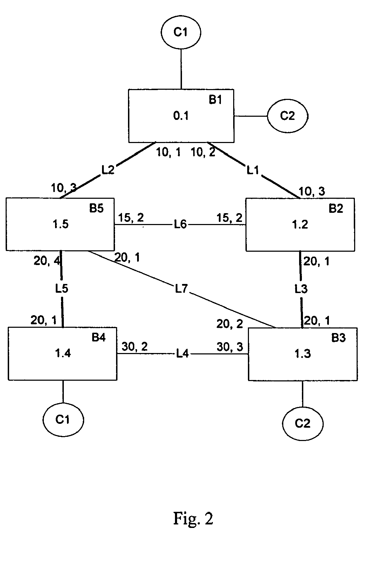

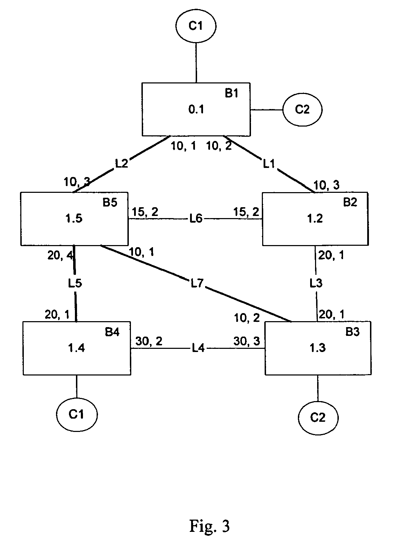

Fig. 2 shows a spanning tree (links in bold type) used to determine a route for service S1 traffic. Here, the multiple spanning tree protocol (MSTP) is used to calculate spanning tree instances, which can be mapped to VLANs (i.e. services such as S1 and S2). Alternative route determination (e.g. via STP, RSTP, or direct route calculation) also is readily applicable. The spanning tree shown defines a unique route (or path) between the C1 sites (e.g. L2 and L3). Service S2 is mapped to a different spanning tree instance shown in fig. 3 (bold type links). The resulting route connecting the C2 sites consists of links L2 and L7. Both services could be mapped to the same spanning tree instance. The use of multiple spanning tree instances, however, is favourable with respect to a balanced traffic load.

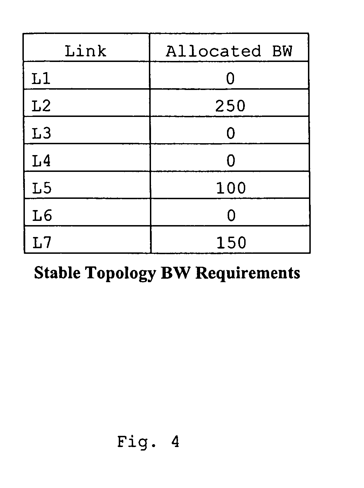

The total allocated bandwidth under normal operation conditions (unperturbed topology) is shown in fig. 4. Link L2 is used for both services. Thus, it has to carry maximum priority traffic of 250 MB/s. Links L5 and L7 have to carry a maximum load of 100 and 150 MB/s.

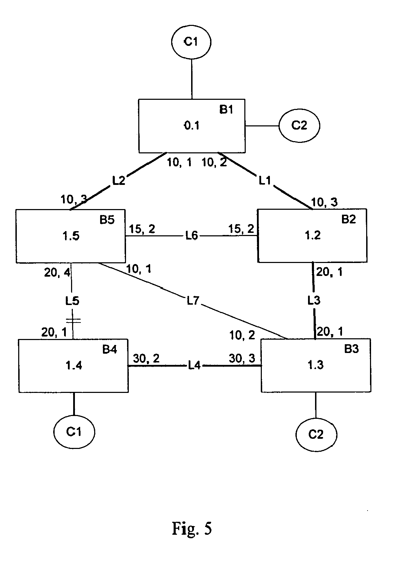

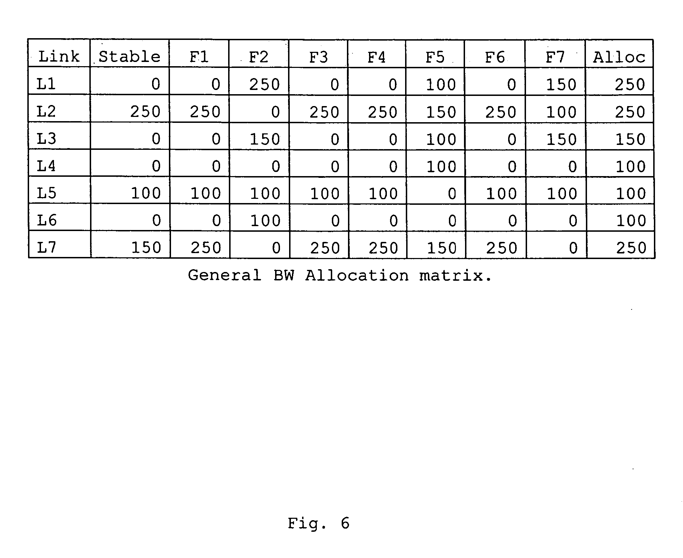

In order to be in a position to guarantee the bandwidth even if network failures occur, error scenarios are taken into account. Fig. 5 shows a spanning tree instance mapped to service S1 in case of a failure of link L5. The resulting route passes via links L1, L3, and L5. Analogously, failures of all other links are taken into account to check whether the network can still support the agreed services. In fig. 6 a bandwidth allocation matrix is shown where in addition to the regular operation topology (stable) all error scenarios with one link out of operation are taken into account. The last column (Alloc) provides the maximum allocated bandwidth for each link.

In none of the error scenarios taken into account the maximum (i.e. worst-case) allocated bandwidth should exceed the available bandwidth for this kind of services, i.e. 300 MB/s. When adding a new service it is checked whether the above criterion is still met. A service admission control procedure for checking the admissibility of new services may then comprise the following steps:
- Computation of service routes for the regular operation case and for each of the failure scenarios.
- Generation of a bandwidth allocation matrix for the new service.
- Adding the bandwidth allocation matrix for the service to the general bandwidth (accumulated bandwidth) allocation matrix.
- No admission of service if a value in the allocated bandwidth column (maximum allocated bandwidth for each link with the maximum taken over all failure scenarios and the regular operation case) of the general (accumulated) bandwidth allocation matrix exceeds the link RGBW value for any link. For further admission control the original general bandwidth allocation matrix (i.e. without the added entries for the new service) is applied.
- Admission of service if no value in the allocated bandwidth column of the general bandwidth allocation matrix exceeds the link RGBW.

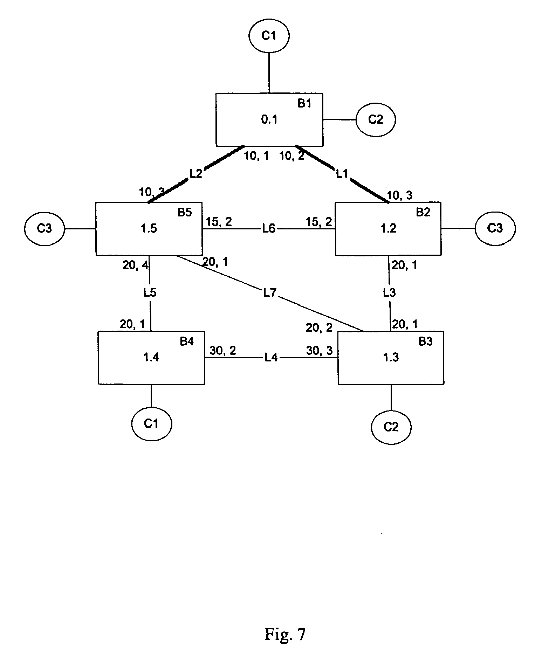

By way of example, the above procedure can be illustrated by adding a service to the network of fig. 1. Fig. 7 shows this network with an additional service S3 connecting customer sites C3. This service S3 is assumed to require a bandwidth of 100 MB/s. In Fig. 7 a route is shown that was calculated for regular operation conditions. Fig. 8 shows the bandwidth allocation matrix for regular operation conditions as well as for failure scenarios (F1, ...,F7). When adding this matrix to the general bandwidth allocation matrix a new general bandwidth allocation matrix results (shown in fig. 9). According to this matrix the load of link L2 exceeds the maximum bandwidth available (for regular operation conditions and failure scenarios F3, F4, and F6). Thus, the service S3 is not admitted.

## Claims

1. A method for providing bandwidth resources for a guaranteed bandwidth service in an Ethernet network, which is composed of switches and links, comprising the steps of
- receiving a request for adding a guaranteed bandwidth service,
- determining links to be used for said service,
- calculating the total resources to be reserved on said links after adding said service,
- checking whether sufficient resources are available on said links,
- admitting the service and allocating resources subject to the availability of sufficient resources, and
- providing for traffic policing in accordance with said allocated resources.

2. The method of claim 1, further comprising
- employing a spanning tree method for determining said links.

3. The method of claim 2, further comprising
- calculating a spanning tree instance, and
- mapping said service to the spanning tree instance.

4. The method of one of the preceding claims, wherein
- said links are determined by the network management.

5. The method of one of the preceding claims, further comprising
- identifying an error scenario for said service, and
- determining links to be used in said error scenario,
- checking whether sufficient resources are available on said links for said error scenario, and
- allocating resources subject to the availability of the resources in said error scenario.

6. The method according to claim 5, wherein
- the error scenario is given by a link failure.

7. The method according to one of the claims 5 or 6, wherein
- the availability of sufficient resources is checked for a plurality of error scenarios, and
- said bandwidth resources are only allocated if sufficient resources are available in all of these error scenarios.

8. A network management system comprising means specially adapted for carrying out steps of a method according to one of the claims 1 to 7, the means including
- means for determining links for a service,
- means for calculating total bandwidth requirements on said links,
- means for checking the availability of the required bandwidth, and
- means for deciding the admissibility of a service in accordance with the availability of the required bandwidth resources.

9. The network management system of claim 8, further comprising
- means for configuring Ethernet switches in accordance with bandwidth requirements of an admitted service.

10. The network management system of claim 8 or 9, further comprising
- means for identifying error scenarios,
- means checking the availability of the required bandwidth in error scenarios,
- means for deciding the admissibility of a service in accordance with the availability of the required bandwidth resources in said error scenarios.
